Europäisches Patentamt

European Patent Office

Office européen des brevets

(11) Veröffentlichungsnummer: **0 329 074**
**A2**

## (12) EUROPÄISCHE PATENTANMELDUNG

(21) Anmeldenummer: **89102506.6**

(22) Anmeldetag: **14.02.89**

(51) Int. Cl.⁴: **F16B 12/28 , F16B 12/44**

(30) Priorität: **19.02.88 DE 3805153**
**21.10.88 DE 8813241 U**

(43) Veröffentlichungstag der Anmeldung:
**23.08.89 Patentblatt 89/34**

(84) Benannte Vertragsstaaten:
**AT BE CH DE ES FR GB GR IT LI LU NL SE**

(71) Anmelder: **Rühlig, Frank**
**Ostring 26**
**D-3501 Fuldabrück 1(DE)**

(72) Erfinder: **Rühlig, Frank**
**Ostring 26**
**D-3501 Fuldabrück 1(DE)**

(74) Vertreter: **Walther, Horst, Dipl.-Ing.**
**Wilhelmshöher Allee 275 Postfach 41 01 08**
**D-3500 Kassel(DE)**

(54) **Regalkonstruktion bestehend aus einzelnen vertikalen und horizontalen Tragelementen.**

(57)
Regalkonstruktion bestehend aus einzelnen vertikalen und horizontalen Tragelementen, die durch Verbindungselemente, bestehend aus jeweils einem Kuppelteil und einem Dübelelement, in Verbindungsrichtung klemmend miteinander verbunden sind, wobei jedes Tragelement zur Aufnahme des Dübelelementes als Hohlprofil ausgebildet ist, wobei jedes Tragelement (1) auf dem äußeren Umfang in gleichem Abstand zueinander vier Längsnuten (14) aufweist, die der Aufnahme von Boden- und Wandelementen (18) des Regales dienen.

Fig. 1

EP 0 329 074 A2

## Regalkonstruktion bestehend aus einzelnen vertikalen und horizontalen Tragelementen.

Die Erfindung betrifft eine Regalkonstruktion bestehend aus einzelnen vertikalen und horizontalen Tragelementen, die durch Verbindungselemente, bestehend aus jeweils einem Kuppelteil und einem Dübelelement, in Verbindungsrichtung klemmend miteinander verbunden sind, wobei jedes Tragelement zur Aufnahme des Dübelelementes als Hohlprofil ausgebildet ist.

Eine Regalkonstruktion der eingangs genannten Art ist aus dem deutschen Gebrauchsmuster G 85 18 780 bekannt. Hierbei werden einzelne Rohre zur Erstellung eines beliebigen vielgestaltbaren Raumgittergerüstes mittels einzelner Verbindungselemente verbunden. Die die eigentliche Regalkonstruktion bildenden Rohre sind glattwandig. Dies hat zur Folge, daß zur sicheren Befestigung von Regalböden bzw. Regalwänden in dem durch die Rohre gebildeten Raumgittergerüst gesonderte Maßnahmen getroffen werden müssen.

Ein weiterer Nachteil dieser bekannten Regalkonstruktion besteht darin, daß eine derartige Regalkonstruktion gegenüber seitlicher Krafteinwirkung äußerst nachgiebig ist. Dieser Nachteil kommt insbesondere dann zum Tragen, wenn es sich um eine Regalkonstruktion von größeren Abmessungen handelt.

Der Erfindung liegt daher die Aufgabe zugrunde eine Regalkonstruktion der eingangs genannten Art zu schaffen, bei der die einzelnen Boden- und Wandelemente eines Regals einfach und stabil befestigt werden können, und die darüberhinaus eine höhere Stabilität gegenüber der Einwirkung äußerer Kräfte aufweist.

Die Aufgabe wird erfindungsgemäß dadurch gelöst, daß jedes Tragelement auf dem äußeren Umfang in gleichem Abstand zueinander vier Längsnuten aufweist, die der Aufnahme von Boden- und Wandelementen des Regales dienen. Durch die formschlüssige Verbindung der Boden- bzw. Wandelemente mit der Regalkonstruktion wird nicht nur erreicht, daß insbesondere die Bodenelemente äußerst tragfähig sind, sondern daß zusätzlich auch die Regalkonstruktion gegenüber äußerer, insbesondere gegenüber seitlicher Krafteinwwirkung stabiler ist, als dies bei der bekannte Regalkonstruktion der Fall ist.

Nach einem weiterem Merkmal der Erfindung sind die Längsnuten eines Tragelementes im Querschnitt schwalbenschwanzförmig ausgebildet, so daß in jede Längsnut eine Schiene, beispielsweise aus Hart-PVC einlegbar ist; hierbei weist die Schiene, die in ihrer äußeren Querschnittskontur etwa dem schwalbenschwanzförmigen Querschnitt der Längsnut entspricht, eine im wesentlichen T-förmige Ausnehmung zur Aufnahme der Regalböden- bzw. Wandelemente auf. Durch diese in eine Längsnut eingeschobene Schiene ist gewährleistet, daß die darin eingelegten Wand- bzw. Bodenelemente auch bei unterschiedlicher Stärke im wesentlichen spielfrei und ohne zu klappern von dem Tragelement gehalten werden. Die konische Ausbildung des T-förmigen Steges der in der Schiene befindlichen Ausnehmung bewirkt, daß die Schiene mit ihren Schenkeln das darin angeordnete Wand- bzw. Bodenelement so erfaßt, daß kein Staub in bestehende Zwischenräume gelangen kann.

Die Verbindung der einzelnen Tragelemente untereinander zur Erstellung eines Raumgittergerüstes erfolgt durch Verbindungselemente bestehend jeweils aus einer mit Gewindebohrungen versehenen Knotenkugel und einem Dübelelement.

Dies Dübelelement selbst, das von dem als Hohlprofil ausgebildeten Tragelement aufgenommen wird, besteht nach einem besonderen Merkmal der Erfindung, aus mindestens zwei getrennten, gegeneinander beweglichen Spreizelementen, und einer die beiden Spreizelemente erfassenden Schraube, die mit der Knotenkugel verschraubbar ist. Im einzelnen besitzten die Spreizelemente jeweils schräge Gleitflächen, die aneinander anliegen. Jedes Spreizelement weist darüberhinaus eine Bohrung für die Schraube auf, wobei der Durchmesser der Bohrung größer als der Schraubendurchmesser ist. Zur Herstellung der Klemmverbindung wird die Schraube mit den darauf befindlichen Spreizelementen in eine Gewindebohrung der Knotenkugel gedreht und dann im noch beweglichen Zustand der Spreizelemente in das als Hohlprofil ausgebildete Tragelement gesteckt. Die Schraube, die an ihrem gewindeseitigen Ende ebenfalls Mittel zur Werkzeugfnahme aufweist, wird dann angezogen, wobei sich die Spreizelemente entlang ihren schrägen Gleitflächen verschieben bis sie jeweils mit zwei ihrer Außenflächen an der Innenwandung des Tragelementes anliegen; das bedeuten, daß die Bohrung der Spreizelemente mindestens so groß sein muß, daß diese Gleitbewegung ermöglicht wird. Durch diese Ausbildung der Klemmverbindung wird erreicht, daß die Klemmung nicht nur punktuell oder linienförmig erfolgt, sondern über eine größere Fläche. Durch diese Art der Klemmverbindung wird eine in sich besonders stabile Verbindung erzielt.

Eine besonderes vorteilhafte Ausführungsform der Verbindung der einzelnen Tragelemente mit den Verbindungselementen besteht darin, daß jedes als Hohlprofil ausgebildete Tragelement einen Innenvierkant aufweist, und das korrespondierend hierzu die Spreizelemente ebenfalls viereckig ausgebildet sind. Hierdurch wird die Befestigung der Verbindungselemente mit dem Tragelement erleichtert.

Nach einem weiteren vorteilhaften Merkmal der Erfindung weist jedes Spreizelement auf seiner der Gleitfläche gegenüberleigenden Seite einen umlaufenden Absatz auf. Hierdurch wird vermieden, daß sich bei plastischer Verformung des Spreizelementes durch den Schraubenkopf bzw. durch die Knotenkugel ein Wulst bildet, der an der Innenwandung anliegt und selbst nach Lösen der Schraube verhindert, daß das Dübelement aus dem Tragelement herausgezogen werden kann.

In der Zeichnung ist eine beispielsweise Ausführungsform dargestellt.

Fig. 1 zeigt eine Klemmverbindung zwischen einer Knotenkugel und zwei Tragelementen;

Fig. 2 zeigt einen Schnitt gemäß der Linie I-I aus Fig. 1;

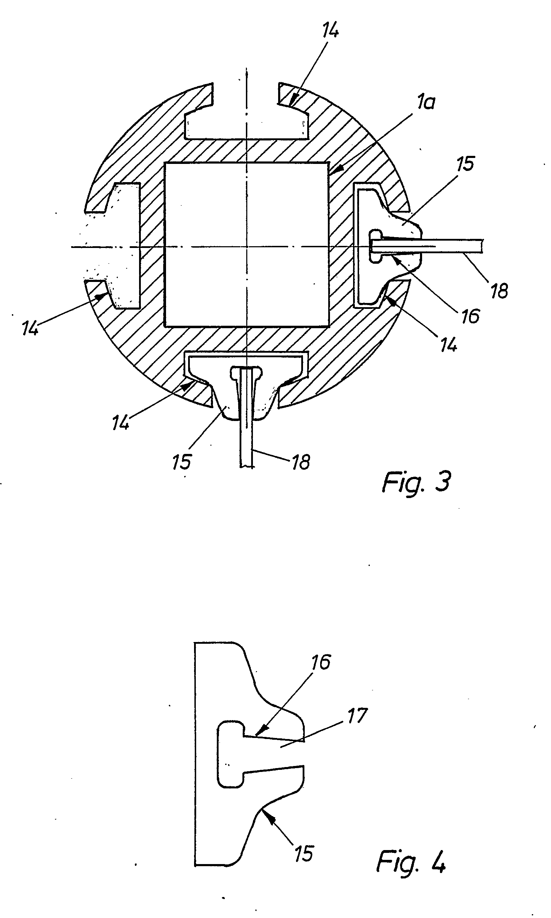

Fig. 3 zeigt das Tragelement in einer stirnseitigen Ansicht;

Fig. 4 zeigt die Schiene in einer stirnseitigen Ansicht;

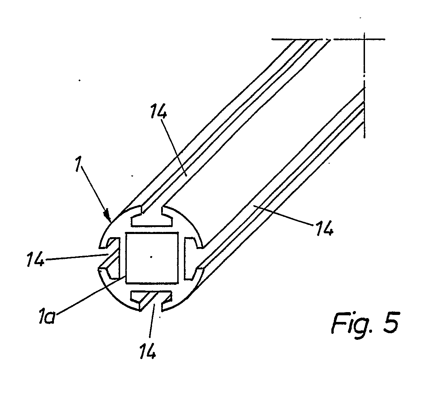

Fig. 5 zeigt ein Tragelement in persektivischer Darstellung.

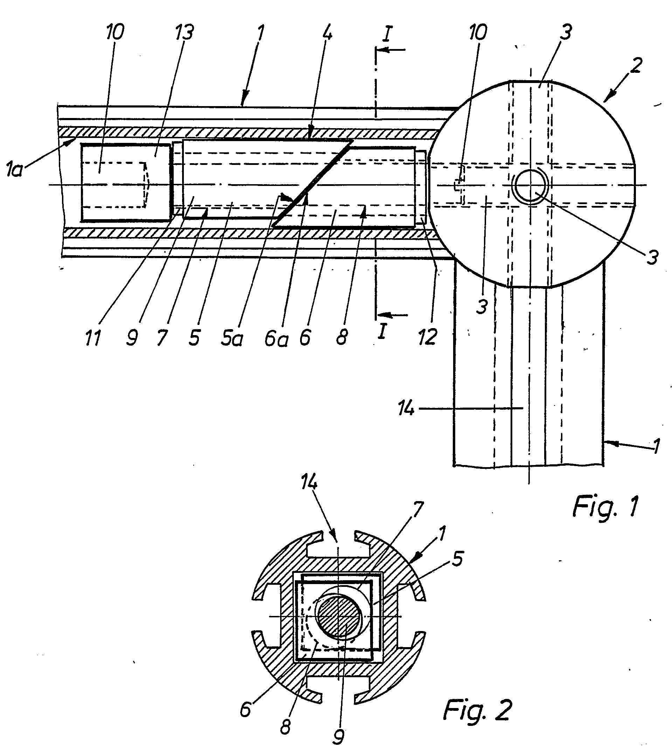

Gemäß Fig. 1 sind die beiden Tragelemente jeweils mit 1 und die als Kuppelteil dienende Knotenkugel mit 2 bezeichnet. Die Knotenkugel 2 weist hierbei drei durchgehende Bohrungen 3 auf. In dem Tragelement 1, das mit einem Innenvierkant versehen ist (Fig. 2) befindet sich das insgesamt mit 4 bezeichnete Dübelelement. Im einzelnen besteht das Dübelelement 4 aus den beiden gegeneinander beweglichen, viereckigen Spreizelementen 5 und 6 und der Schraube 9. Auf ihrer einander zugewandten Seite weisen die beiden Spreizelemente 5, 6 jeweils eine schräge Gleitfläche 5a, 6a auf. Beide Spreizelemente besitzen eine Bohrung 7 bzw. 8, deren Durchmesser größer ist, als der Durchmesser der Schraube 9, die mit ihrem Gewindeteil in die Bohrung 3 der Knotenkugel 2 eingreift. Die Schraube selbst weist zu beiden Enden Mittel 10 zur Aufnahme eines Werkzeuges, beispielsweise eines Schraubendrehers auf. Durch Eindrehen der Schraube 9 in das Gewinde 3 der Knotenkugel 2 werden die beiden Spreizelemente 5, 6 auf ihren Gleitflächen 5a, 6a gegeneinander verschoben; im fest eingespannten Zustand liegt, wie sich diese aus Fig. 2 unmittelbar ergibt, jedes Spreizelement 5, 6 jeweils mit zwei außenliegenden Flächen an der Innenwandung des Tragelementes an.

Der umlaufende Absatz 11 bzw. 12 der beiden Spreizelemente 5 und 6 verhindert, daß bei Verformung der Spreizelemente durch den Schraubenkopf 13 oder die Knotenkugel 2 ein an der Innenwandung des Tragelementes anliegender, bleibender Wulst gebildet wird, so daß in jedem Fall gewährleistet ist, daß das Dübelelement nach Lösen der Schraube immer wieder aus dem Tragelement herausgezogen werden kann.

Jedes Tragelement 1 der Regelkonstruktion besitzt auf seinem äußeren Umfang in gleichem Abstand zueinander vier Langsnuten 14 zur Aufnahme der Regalböden 18 oder Regalwände 18, je nach dem ob das betreffende Tragelement horizontaler oder vertikaler Bestandteil des Raumgittergerüstes der Regalkonstruktion ist.

Die vier Längsnuten 14 eines Tragelementes 1 sind im Schnitt schwalbenschwanzförmig ausgebildet. Die Schiene 15, die zur Aufnahme eines Boden- oder Wandelementes in die Längsnut 14 eingelegt werden kann, entspricht in ihrer Querschnittskontur dem schwalbenschwanzförmigen Querschnitt der Längsnut. Zur Aufnahme von Regalböden bzw. Wandelementen 18 besitzt die Schiene 15 eine im wesentlichen T-förmige Ausnehmung 16, wobei der Steg 17 der T-förmigen Ausnehmung konisch ausgebildet ist. Die konische Ausbildung des Steges 17 bewirkt, daß auch bei dünneren Böden 18 bzw. Wandelementen 18 der Eintritt von Staub in bestehende öffnungen verhindert wird.

## Ansprüche

1. Regalkonstruktion bestehend aus einzelnen vertikalen und horizontalen Tragelementen, die durch Verbindungselemente, bestehend aus jeweils einem Kuppelteil und einem Dübelelement, in Verbindungsrichtung klemmend miteinander verbunden sind, wobei jedes Tragelement zur Aufnahme des Dübelelementes als Hohlprofil ausgebildet ist, **dadurch gekennzeichnet,** daß jedes Tragelement (1) auf dem äußeren Umfang in gleichem Abstand zueinander vier Längsnuten (14) aufweist, die der Aufnahme von Boden- und Wandelementen (18) des Regales dienen.

2. Vorrichtung nach Anspruch 1 **dadurch gekennzeichnet,** daß die Längsnuten (14) im Querschnitt nach Art einer Schwalbenschwanzführung ausgebildet sind.

3. Vorrichtung nach Anspruch 1 **dadurch gekennzeichnet,** daß in jede Längsnut (14) eine Schiene (15) einlegbar ist.

4. Vorrichtung nach Anspruch 2 und 3 **dadurch gekennzeichnet,** daß jede Schiene (15), die in ihrer äußeren Querschnittskontur etwa dem schwalbenschwanzförmigen Querschnitt der Längsnut (14) entspricht, eine im wesentlichen T-förmige Ausnehmung (16) aufweist.

5. Vorrichtung nach Anspruch 4 **dadurch gekennzeichnet,** daß der Steg (17) der T-förmigen Ausnehmung (16) konisch ausgebildet ist.

6. Vorrichtung nach Anspruch 1
**dadurch gekennzeichnet,** daß das Kuppelteil eine mit Gewindebohrungen (3) versehene Knotenkugel (2) ist.

7. Vorrichtung nach Anspruch 7
**dadurch gekennzeichnet,** daß das Dübelelement (4) aus mindestens zwei getrennten, gegeneinander beweglichen Spreizelementen (5, 6) und einer die Spreizelemente (5, 6) erfassenden Schraube (9) besteht, die mit der Knotenkugel (2) verbunden ist.

8. Vorrichtung nach Anspruch 7
**dadurch gekennzeichnet,** daß die Schraube (9) zu beiden Seiten Mittel (10) zur Aufnahme eines Werkzeuges besitzt.

9. Vorrichtung nach Anspruch 7
**dadurch gekennzeichnet,** daß jedes Spreizelement (5, 6) eine schräge Gleitfläche (5a, 6a) aufweist, wobei die Gleitflächen (5a, 6a) aneinander anliegen.

10. Vorrichtung nach Anspruch 7 und 8
**dadurch gekennzeichnet,** daß jedes Spreizelement (5, 6) eine Bohrung (7, 8) zur Aufnahme der Schraube (9) aufweist, wobie der Durchmesser der Bohrung (7, 8) größer ist, als der Durchmesser der Schraube (9).

11. Vorrichtung nach Anspruch 7
**dadurch gekennzeichnet,** daß das als Hohlprofil ausgebildete Tragelement (1) einen Innenvierkant (1a) aufweist, und jedes Spreizelement (5, 6) korrespondierend hierzu im Querschnitt viereckig ausgebildet ist.

12. Vorrichtung nach Anspruch 7 und 9
**dadurch gekennzeichnet,** daß jedes Spreizelement (5, 6) an der der Gleitfläche (5a, 6a) gegenüberliegenden Seite einen umlaufenden Absatz (11, 12) aufweist.

Fig. 1

Fig. 2

Fig. 3

Fig. 4

*Fig. 5*